# EUROPEAN PATENT APPLICATION

(11) **EP 4 296 115 A1**
(43) Date of publication of application: **27.12.2023**
(21) Application number: 23178883.7
(22) Date of filing: 13.06.2023
(51) Int. Cl.: B60L 55/00, B60L 58/12, H02J 3/14

(54) **POWER SUPPLY MANAGING SYSTEM AND POWER SUPPLY MANAGING METHOD**

(30) Priority: 23.06.2022 JP 2022101332
(71) Applicant: HONDA MOTOR CO., LTD., Minato-ku Tokyo 107-8556 (JP)
(72) Inventor: SHINKE, Takahiro, Tokyo, 107-8556 (JP); SAEKI, Hibiki, Tokyo, 107-8556 (JP)
(74) Representative: Weickmann & Weickmann PartmbB

(57) **Abstract**

There is provided a power transmission/reception system capable of enhancing motivation of users of movable bodies including batteries, such as EVs, to participate in a VPP. A power supply system (1) including a charge amount recognizing section (32) that recognizes a charge amount of a battery (7) mounted on a movable body (5), wherein when the movable body (5) is in a state where power supply from the battery (7) to a charge and discharge apparatus (13) is possible, a power supply target is determined based on the charge amount of the battery (7) and a current time, the power supply target being to undergo power supply from the battery (7) .

## Description

### BACKGROUND OF THE INVENTION

### Field of the Invention

The present invention relates to a power supply managing system and a power supply managing method.

### Description of the Related Art

Research and development of virtual power plants (VPP: Virtual Power Plant) which contribute to optimization of energy have been recently being conducted in order to enable more people to secure reasonable and reliable access to sustainable and advanced energy. Among those, based on technologies such as V2X (Vehicle to X) using an EV (electric vehicle) or the like, there is developed a technology of enabling efficient use of energy by timely causing electricity stored in batteries of EVs and the like to discharge (see Japanese Patent Laid-Open No. 2021-191044, which is hereinafter referred to as Patent Literature 1). Moreover, without the energy management as above closed within a single customer in a BTM (Behind the Meter) manner, there are being investigated electricity retailing businesses that timely conduct charge and discharge based on control of resources, of a plurality of customers, that are put into a network.

### SUMMARY OF THE INVENTION

With a system disclosed in Patent Literature 1, there are compared differences or ratios, each of which is taken between a current SOC (State Of Charge) of a battery in an EV and a charge-requesting SOC thereof based on a scheduled use of the EV, to determine the charge priority and the discharge priority of each EV. There is employed a configuration of, then, supplying electric power from EVs having higher discharge priorities to other EVs and building facilities.

When there are determined such discharge destinations of the batteries of the EVs on the basis of the current SOCs and the charge-requesting SOCs of the batteries, there can arise a case where power supply to the determined discharge destinations is not necessarily advantageous to a user of an EV. In such a case, there arises a problem that some users of EVs lose motivation to participate in a VPP, which situation disturbs the optimization of energy using the VPP. In order to solve the problem(s) mentioned above, an object of the present application is to provide a power supply managing system capable of enhancing motivation of users of movable bodies including batteries, such as EVs, to participate in a VPP.

There is exemplified as a first aspect in order to achieve the aforementioned object a power supply managing system including a charge amount recognizing section that recognizes a charge amount of a battery mounted on a movable body, wherein when the movable body is in a state where power supply from the battery to a charge and discharge apparatus is possible, a power supply target is determined based on the charge amount of the battery and a current time, the power supply target being to undergo power supply from the battery.

There is exemplified according to the aforementioned power supply managing system a power supply managing system including: a charge amount recognizing section that recognizes a charge amount of a battery of a movable body; a scheduled date-and-time-of-use recognizing section that recognizes a next scheduled date and time of use of the movable body; a target attribute information recognizing section that acquires target attribute information indicating attributes of a plurality of targets that are able to undergo power supply from the battery via the charge and discharge apparatus; and a power supply target determining section that, when the movable body is in the state where the power supply from the battery to the charge and discharge apparatus is possible, determines a power supply target out of the plurality of targets based on the charge amount of the battery, the current time, the next scheduled date and time of use of the movable body, and the target attribute information, the power supply target being to undergo the power supply from the battery via the charge and discharge apparatus.

There may be employed according to the aforementioned power supply managing system a configuration that when a time from a time point of determination of the power supply target to the next scheduled date and time of use of the movable body is not less than a first predetermined time and the charge amount of the battery is not less than a first predetermined amount, the power supply target determining section determines a target recognized as an object used by a user of the movable body as the power supply target out of the plurality of targets based on the target attribute information.

There may be employed according to the aforementioned power supply managing system a configuration that when the time from the time point of determination of the power supply target to the next scheduled date and time of use of the movable body is not less than the first predetermined time and the charge amount of the battery is not less than a second predetermined amount larger than the first predetermined amount, the power supply target determining section determines a target recognized as not being the object used by the user of the movable body as the power supply target out of the plurality of targets based on the target attribute information.

There may be employed according to the aforementioned power supply system a configuration that when a time from a time point of determination of the power supply target to the next scheduled date and time of use of the movable body is not less than a second predetermined time and the charge amount of the battery is not less than a third predetermined amount, the power supply target determining section determines a target as the power supply target based on the target attribute information, the target being recognized as being positioned at a place where a distance from the charge and discharge apparatus is not more than a predetermined distance out of the plurality of targets, in preference to a target positioned at a place where a distance from the charge and discharge apparatus exceeds the predetermined distance.

There may be employed according to the aforementioned power supply system a configuration that when a time from a time point of determination of the power supply target to the next scheduled date and time of use of the movable body is less than a predetermined lower limit time, the power supply target determining section prohibits power supply from the battery to the target via the charge and discharge apparatus.

There may be employed according to the aforementioned power supply system a configuration that when the charge amount of the battery is less than a predetermined lower limit charge amount, the power supply target determining section charges the battery with electric power supplied from a power grid to the charge and discharge apparatus.

There is exemplified as a second aspect in order to achieve the aforementioned object a power supply managing method executed by a computer, the method including: a charge amount recognizing step of recognizing a charge amount of a battery mounted on a movable body; and a power supply target determining step of determining, when the movable body is in a state where power supply from the battery to a charge and discharge apparatus is possible, a power supply target based on the charge amount of the battery and a current time, the power supply target being to undergo power supply from the battery via the charge and discharge apparatus.

According to the power supply managing system of the present disclosure, motivation of a user of a movable body including a battery, such as an EV, to participate in a VPP can be enhanced.

### BRIEF DESCRIPTION OF THE DRAWINGS

FIG. 1 is a block diagram showing a mode of a power supply managing system according to an embodiment of the present invention;
FIG. 2 is a first flowchart showing processing in the power supply managing system; and
FIG. 3 shows second flowcharts showing the processing in the power supply managing system.

### DETAILED DESCRIPTION OF THE PREFERRED EMBODIMENTS

Hereafter, an embodiment of the present invention will be described with reference to the drawings.

### [1. Configuration of Power Management System]

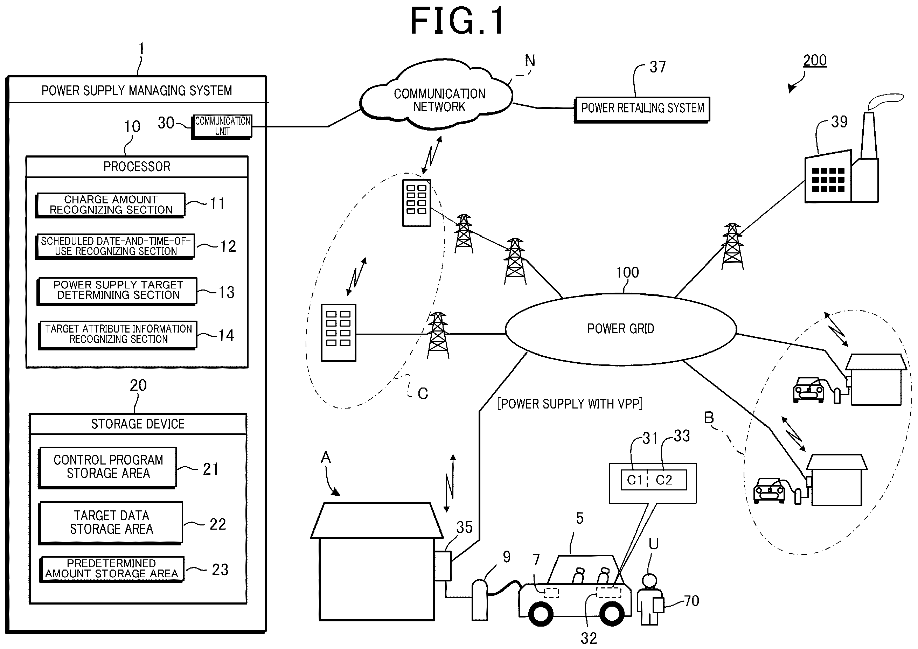

FIG. 1 is a block diagram showing a configuration 200 of power demand and supply including a power supply managing system 1 according to the present embodiment. The configuration 200 of power demand and supply includes a power plant 39 and a power grid 100 which supply electric power, an EV (movable body) 5 mentioned later, a home facility A of a user of the EV 5, targets B of power supply existing in an area B which is in a short distance from A, and targets of power supply existing in an area C which is in a long distance from A. The EV 5 may be what is called an automobile or a saddle riding vehicle.

The power supply managing system 1 performs charge and discharge management on a battery 32 included in the EV 5 used by a user U. Through the charge and discharge management, the power supply managing system 1 causes the battery 32 to function as a VPP to perform power supply from the battery 32 to electric appliances in the house A and to other facilities via the power grid 100.

A smart meter 35 is connected to a power retailing system 37 and the power supply managing system 1 via a communication network N through wireless communication. Connection to the communication network N may be of course attained through wired communication.

The power supply managing system 1 is a server, and specifically, a computer system having a processor 10 such as a CPU (Central Processing Unit), and the like. The power supply managing system 1 includes the processor 10 which performs various arithmetic operations, a storage device 20 which stores programs and the like, and a communication unit 30 which communicates with the communication network N.

The power supply managing system 1 controls power supply with the VPP with the battery 32 mounted on the EV 5 being as a target. Hereafter, a case of controlling power charge and discharge with the VPP with the EV 5 and the like being as targets will be described. The power supply managing system 1 also performs the similar control on a battery 32 of another EV such, for example, as an EV used by a VPP participant (contractor using the VPP) B near the home of the user U.

The storage device 20 includes a ROM (Read Only Memory) having programs written, a RAM (Random Access Memory) for temporary storage of data, and a storage medium such as an HDD (Hard Disk Drive) or an SSD (Solid State Drive), and includes a control program storage area 21 that stores a control program, a target data storage area 22 that stores data regarding power supply targets, and a predetermined amount storage area 23 that stores thresholds and the like for various kinds of control. The processor 10 implements various functions by executing the control program using data stored in the storage device 20.

The processor 10 implements a function of a charge amount recognizing section 11 that recognizes an SOC (charge amount) of the battery 32 mounted on the EV 5. Specifically, the smart meter 35 acquires information from an ECU 7 that controls the battery 32 of the EV 5, and the power supply managing system 1 recognizes the charge amount of the battery 32 via the communication network N and the communication unit 30.

The battery 32 of the EV 5 is virtually divided into a first region 31 as a user region the charge and discharge of which can be determined by the user U, and a second region 33 as a region where power supply with the VPP is handled.

The processor 10 implements a function of a power supply target determining section 13 that performs comparison and determination between various predetermined amounts stored in the predetermined amount storage area 23 and measurement amounts acquired and recognized by the processor 10 such, for example, as the charge amount. The power supply target determining section 13 determines a power supply target that is a target that is to undergo power supply from the battery 32 via the charge and discharge apparatus 9.

Moreover, the processor 10 implements a function of a scheduled date-and-time-of-use recognizing section 12 that recognizes a next scheduled date and time of use of the EV 5. The scheduled date-and-time-of-use recognizing section 12 has a function of determining whether or not a scheduled date and time of use is included in a predetermined period stored in the predetermined amount storage area 23. Moreover, the scheduled date-and-time-of-use recognizing section 12 has a function of acquiring a period from a current time (time point when determination processing of the power supply target is performed) to the next scheduled date and time of use.

Moreover, the processor 10 implements a function of a target attribute information recognizing section 14 that acquires target attribute information indicating attributes of a plurality of targets that can undergo power supply from the battery 32 via the charge and discharge apparatus 9. Here, the target attribute information includes users of the targets (owners, renting persons, and the like), and distance information to the targets from the charge and discharge apparatus 9 (consignment charge information). In the present specification, the consignment charge means a charge that a general power transmission and distribution company sets as a charge of use for a power transmission and distribution network used by an electricity retailing company in transmission of electricity.

The communication unit 30 has an interface circuit that connects the power supply managing system 1 and the communication network N.

In place of or in addition to the processor 10 and the storage device 20 of the power supply managing system 1 above, each of the entire pats or some parts of the power supply managing system 1 above can also be configured of hardware including one or more electronic circuit components.

The EV 5 includes the battery 32 which stores electric power. The battery 32 virtually includes the first region 31 where the user of the EV 5 can determine the usage of electricity, and the second region 33 where the user of the EV 5 cannot determine the usage of electricity. The power supply managing system 1 may control charge and discharge of the first region 31 and the second region 33. The battery 32 is connected to the charge and discharge apparatus 9 via a connection cable, and the charge and discharge apparatus 9 is connected to the power grid 100 and electric wiring in the house A via the smart meter 35. Notably, while in the present embodiment, there is exemplarily illustrated a configuration of virtually dividing and managing the battery 32 into the first region and the second region, there may be taken a configuration without such virtual division.

In FIG. 1, as well as the user U as a user of the EV 5, there is also used, as the VPP, a battery of the EV positioned in the area B near the house A as the home of the user U. Moreover, EVs positioned in the area B and facilities and the like positioned in the area C in a long distance from the home facility A of the user U are targets of power supply with the VPP.

### [2. Processing by Power Management System]

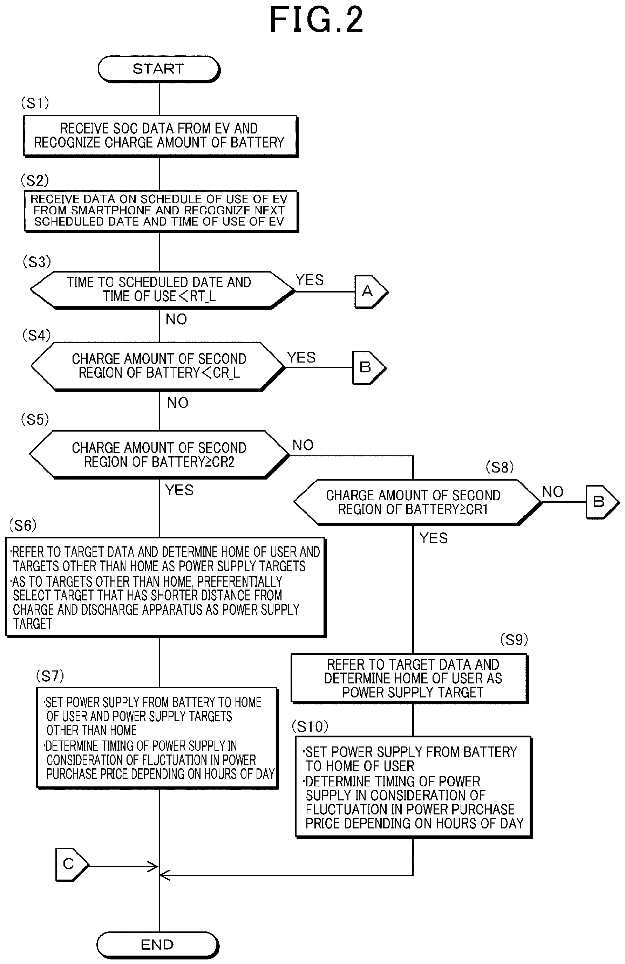

FIG. 2 is a flowchart showing processing in the power supply managing system 1. A state is supposed where the EV 5 is connected to the charge and discharge apparatus 9 via a connection cable. The charge amount recognizing section 11 receives SOC data from the EV 5 to recognize the charge amount of the battery 32 (step S1). The scheduled date-and-time-of-use recognizing section 12 recognizes the next scheduled date and time of use of the EV 5 of the user U (step S2). Specifically, by a TCU (Telematics Control Unit) (not shown), of the EV 5, linking, for example, with a schedule application in a smartphone 70 of the user U, the scheduled date-and-time-of-use recognizing section 12 recognizes the next scheduled date and time of use of the EV 5 via the smart meter 35. Next, the power supply target determining section 13 determines whether or not a time to the scheduled date and time of use is smaller than a first predetermined time RT_L (step S3). When the time to the scheduled date and time of use is not less than the first predetermined time RT_L (step S3: NO), the power supply target determining section 13 determines whether or not a charge amount of the second region 33 of the battery 32 is less than a lower limit charge amount CR_L (step S4). When the charge amount of the second region 33 of the battery 32 is not less than the lower limit charge amount CR_L (step S4: NO), the power supply target determining section 13 determines whether or not the charge amount of the second region 33 in the battery 32 is not less than a second predetermined amount (step S5). When the charge amount of the second region 33 is not less than the second predetermined amount (step S5: YES), the target attribute information recognizing section 14 refers to target data and determines the home facility A of the user U and targets that are other than the home facility A as power supply targets. Here, as to the targets that are other than the home facility A, the power supply target determining section 13 preferentially selects a target that has a shorter distance from the charge and discharge apparatus 9 as a power supply target (step S6).

Specifically, in order that the power supply target determining section 13 considers a charge of use for power lines, the target attribute information recognizing section 13 recognizes information regarding distances from the charge and discharge apparatus 9 of the user U to power supply targets of other VPP participants and a consignment charge, and then, determines a power supply target. For example, when distances from the charge and discharge apparatus 9 are compared, since a consignment charge required for power supply is lower when a VPP participant B near the home facility A of the user U undergoes power supply than when a VPP participant C in a long distance from the home facility A of the user U undergoes power supply, the power supply target determining section 13 desirably determines the power supply to the VPP participant B near the home facility A of the user U. As to the degrees of priority of power supply targets by the power supply target determining section 13, the highest one may be given the EV 5 of the user U or the home facility A of the user U, and based on the information acquired by the target attribute information recognizing section 14, the degrees of priority of power supply may be determined among the power supply targets.

The power supply target determining section 13 sets power supply from the battery 32 to the home facility A of the user U and power supply targets other than the home facility A. In consideration of fluctuation in power purchase price depending on hours of the day, timing of power supply to the power supply targets is determined (step S7).

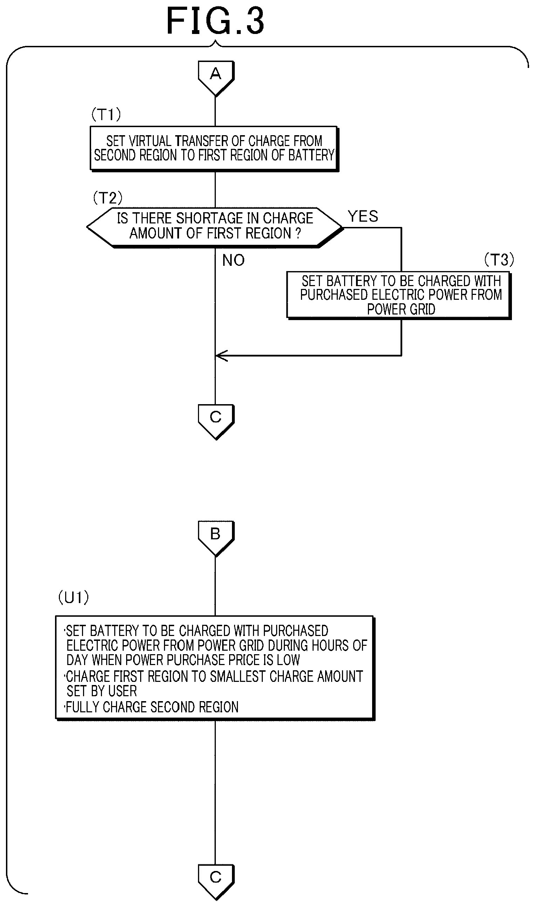

When the time to the scheduled date and time of use is less than the first predetermined time RT_L (step S3: YES), the power supply target determining section 13 sets virtual transfer of charge from the second region 33 to the first region 31 of the battery 32 (movement to A in FIG. 3, followed by performance of step T1). The power supply target determining section 13 determines whether or not there is a shortage in charge amount of the first region 31 of the battery 32 (step T2). Specifically, the power supply target determining section 13 compares the charge amount of the first region 31 with a fourth predetermined amount stored in the predetermined amount storage area 23. When there is no shortage in charge amount of the first region 31 of the battery 32 (step T2: NO), the process is returned to C in FIG. 1 and is ended. When there is a shortage in charge amount of the first region 31 of the battery 32 (step T2: YES), the power supply target determining section 13 sets the battery 32 to be charged with purchased electric power from the power grid 100 (step T3), and the process is returned to C in FIG. 2 and is ended.

In FIG. 2, when the charge amount of the second region 33 is less than the second predetermined amount (step S5: NO), the power supply target determining section 13 determines whether or not the charge amount of the second region 33 in the battery 32 is not less than a first predetermined amount CR1 (step S8). When the charge amount of the second region 33 in the battery 32 is not less than the first predetermined amount CR1 (step S8: YES), the power supply target determining section 13 refers to the target data in the target data storage area 22 and determines the home facility A of the user U as the power supply target (step S9). Then, the power supply target determining section 13 sets power supply from the battery 32 to the home facility A of the user U, and determines timing of the power supply in consideration of fluctuation in power purchase price depending on hours of the day (step S10).

When the charge amount of the second region 33 in the battery 32 is less than the first predetermined amount CR1 (step S8: NO), after movement to B in FIG. 3, the power supply target determining section 13 sets the battery to be charged with purchased electric power from the power grid 100 during hours of the day when the power purchase price is low. Moreover, the power supply target determining section 13 charges the first region 31 to the smallest charge amount set by the user U. Here, the power supply target determining section 13 sets the second region 33 to be fully charged (step U1).

Herein, relationship in measurement between the lower limit charge amount CR_L, the first predetermined amount CR1, and the second predetermined amount CR2 is CR _L<CR1<CR2.

### [3. Other Embodiments]

As a modification of the aforementioned embodiment, for example, when a time from a time point of determination of the power supply target to the next scheduled date and time of use of the EV 5 is not less than a second predetermined time and the charge amount of the battery 32 is not less than a third predetermined amount, the power supply target determining section 13 may determine, as the power supply target, a target that is recognized as being positioned at a place where a distance from the charge and discharge apparatus 9 is not more than a predetermined distance based on the target attribute information acquired by the target attribute information recognizing section 14, in preference to a target positioned at a place where a distance from the charge and discharge apparatus 9 exceeds the predetermined distance.

As another modification, when a time from a time point of determination of the power supply target to the next scheduled date and time of use of the EV 5 is less than a predetermined lower limit time, the power supply target determining section 13 may prohibit power supply from the battery 32 to another power supply target via the charge and discharge apparatus 9.

### [4. Configurations Supported by Aforementioned Embodiment]

(Configuration 1) A power supply managing system including a charge amount recognizing section that recognizes a charge amount of a battery mounted on a movable body, wherein when the movable body is in a state where power supply from the battery to a charge and discharge apparatus is possible, a power supply target is determined based on the charge amount of the battery and a current time, the power supply target being to undergo power supply from the battery.

According to such a configuration, motivation of a user of the movable body including the battery, such as an EV, to participate in a VPP can be enhanced. Therefore, there can be attained an effect of enabling more people to secure reasonable and reliable access to sustainable and advanced energy.

(Configuration 2) The power supply managing system according to Configuration 1, including: a scheduled date-and-time-of-use recognizing section that recognizes a next scheduled date and time of use of the movable body; a target attribute information recognizing section that acquires target attribute information indicating attributes of a plurality of targets that are able to undergo power supply from the battery via the charge and discharge apparatus; and a power supply target determining section that, when the movable body is in the state where the power supply from the battery to the charge and discharge apparatus is possible, determines a power supply target out of the plurality of targets based on the charge amount of the battery, the current time, the next scheduled date and time of use of the movable body, and the target attribute information, the power supply target being to undergo the power supply from the battery via the charge and discharge apparatus.

According to the power supply managing system of Configuration 2, the power supply target to which electric power is to be supplied from the battery via the charge and discharge apparatus can be determined in consideration of a margin of power supply from the battery to the target and the attributes of the target, the margin being able to be estimated from the next scheduled date and time of use of the movable body and the charge amount of the battery. Thereby, there can be relieved reluctance of the user of the movable body against utilizing the battery of the movable body with a VPP, and the motivation of the user of the movable body to participate in the VPP can be enhanced.

(Configuration 3) The power supply managing system according to Configuration 2, wherein when a time from a time point of determination of the power supply target to the next scheduled date and time of use of the movable body is not less than a first predetermined time and the charge amount of the battery is not less than a first predetermined amount, the power supply target determining section determines a target recognized as an object used by a user of the movable body as the power supply target out of the plurality of targets based on the target attribute information.

According to the power supply managing system of Configuration 3, the object used by the user of the movable body is determined as the power supply target when there is a margin of electric power taken out from the battery with respect to the schedule of use of the movable body by the user. Thereby, electric power can be actively supplied from the battery to the object used by the user, the object being supposed to be small in reluctance of the user against electric power taken out from the battery.

(Configuration 4) The power supply managing system according to Configuration 3, wherein when the time from the time point of determination of the power supply target to the next scheduled date and time of use of the movable body is not less than the first predetermined time and the charge amount of the battery is not less than a second predetermined amount larger than the first predetermined amount, the power supply target determining section determines a target recognized as not being the object used by the user of the movable body as the power supply target out of the plurality of targets based on the target attribute information.

According to the power supply managing system of Configuration 4, an object other than the object used by the user is determined as the power supply target when there is further a margin of electric power taken out from the battery with respect to the schedule of use of the movable body by the user. Thereby, limitedly when there is a sufficient margin of electric power taken out from the battery, electric power can be supplied from the battery to an object other than the object used by the user.

(Configuration 5) The power supply managing system according to Configuration 2, wherein when a time from a time point of determination of the power supply target to the next scheduled date and time of use of the movable body is not less than a second predetermined time and the charge amount of the battery is not less than a third predetermined amount, the power supply target determining section determines a target recognized as being positioned at a place as the power supply target out of the plurality of targets based on the target attribute information, the place being where a distance from the charge and discharge apparatus is not more than a predetermined distance, in preference to a target positioned at a place where a distance from the charge and discharge apparatus exceeds the predetermined distance.

According to the power supply managing system of Configuration 5, an object the distance of which from the charge and discharge apparatus is expected to be short, which leads to a small consignment charge required for power supply, can be preferentially determined as the power supply target.

(Configuration 6) The power supply managing system according to any one of Configurations 2 to 5, wherein when a time from a time point of determination of the power supply target to the next scheduled date and time of use of the movable body is less than a predetermined lower limit time, the power supply target determining section prohibits power supply from the battery to the power supply target via the charge and discharge apparatus.

According to the power supply managing system of Configuration 6, when there is little time to spare by the next scheduled date and time of use of the movable body, power supply from the battery to the target via the charge and discharge apparatus can be prohibited. Therefore, an inconvenience can be prevented from arising in the next use of the movable body by the user.

(Configuration 7) The power supply managing system according to any one of Configurations 2 to 5, wherein when the charge amount of the battery is less than a predetermined lower limit charge amount, the power supply target determining section charges the battery with electric power supplied from a power grid to the charge and discharge apparatus.

According to the power supply managing system of Configuration 7, when the charge amount of the battery is less than the lower limit charge amount, the battery can be charged to maintain the charge amount of the battery to be not less than a certain level.

(Configuration 8) A power supply managing method executed by a computer, the method including: a charge amount recognizing step of recognizing a charge amount of a battery of a movable body; and a power supply target determining step of determining, when the movable body is in a state where power supply from the battery to a charge and discharge apparatus is possible, a power supply target based on the charge amount of the battery and a current time, the power supply target being to undergo power supply from the battery via the charge and discharge apparatus.

By causing a computer to execute the power supply managing method of Configuration 8, the similar operation and effect(s) to those of the power supply managing system of Configuration 1 can be obtained.

It is needless to say that a power supply managing system of the present invention is not limited to the aforementioned embodiment but various alterations may occur without departing from the spirit of the present invention.

### REFERENCE SIGNS LIST

- 1: Power supply managing system
- 5: EV (movable body)
- 7: ECU
- 9: Charge and discharge apparatus
- 10: Processor
- 11: Charge amount recognizing section
- 12: Scheduled date-and-time-of-use recognizing section
- 13: Power supply target determining section
- 14: Target attribute information recognizing section
- 20: Storage device
- 21: Control program storage area
- 22: Target data storage area
- 23: Predetermined amount storage area
- 30: Communication unit
- 31: First region
- 32: Battery
- 33: Second region
- 35: Smart meter
- 37: Power retailing system
- 39: Power plant
- 70: Smartphone
- 100: Electric power
- 200: Configuration of power demand and supply
- A: Home facility of a user U
- B: VPP participation area near the home facility of the user U
- C: VPP participation area in a long distance from the home facility of the user U
- N: Communication network

## Claims

1. A power supply managing system (1) **characterized by** comprising
a charge amount recognizing section (11) that recognizes a charge amount of a battery (32) mounted on a movable body (5), wherein
when the movable body is in a state where power supply from the battery to a charge and discharge apparatus (9) is possible,
a power supply target is determined based on the charge amount of the battery and a current time, the power supply target being to undergo power supply from the battery.

2. The power supply managing system according to claim 1, comprising:
a scheduled date-and-time-of-use recognizing section (12) that recognizes a next scheduled date and time of use of the movable body;
a target attribute information recognizing section (14) that acquires target attribute information indicating attributes of a plurality of targets that are able to undergo power supply from the battery via the charge and discharge apparatus; and
a power supply target determining section (13) that, when the movable body is in the state where the power supply from the battery to the charge and discharge apparatus is possible, determines a power supply target out of the plurality of targets based on the charge amount of the battery, the current time, the next scheduled date and time of use of the movable body, and the target attribute information, the power supply target being to undergo the power supply from the battery via the charge and discharge apparatus.

3. The power supply managing system according to claim 2, wherein when a time from a time point of determination of the power supply target to the next scheduled date and time of use of the movable body is not less than a first predetermined time and the charge amount of the battery is not less than a first predetermined amount, the power supply target determining section determines a target recognized as an object used by a user of the movable body as the power supply target out of the plurality of targets based on the target attribute information.

4. The power supply managing system according to claim 3, wherein when the time from the time point of determination of the power supply target to the next scheduled date and time of use of the movable body is not less than the first predetermined time and the charge amount of the battery is not less than a second predetermined amount larger than the first predetermined amount, the power supply target determining section determines a target recognized as not being the object used by the user of the movable body as the power supply target out of the plurality of targets based on the target attribute information.

5. The power supply managing system according to claim 2, wherein when a time from a time point of determination of the power supply target to the next scheduled date and time of use of the movable body is not less than a second predetermined time and the charge amount of the battery is not less than a third predetermined amount, the power supply target determining section determines a target recognized as being positioned at a place as the power supply target out of the plurality of targets based on the target attribute information, the place being where a distance from the charge and discharge apparatus is not more than a predetermined distance, in preference to a target positioned at a place where a distance from the charge and discharge apparatus exceeds the predetermined distance.

6. The power supply managing system according to any one of claims 2 to 5, wherein when a time from a time point of determination of the power supply target to the next scheduled date and time of use of the movable body is less than a predetermined lower limit time, the power supply target determining section prohibits power supply from the battery to the power supply target via the charge and discharge apparatus.

7. The power supply managing system according to any one of claims 2 to 5, wherein when the charge amount of the battery is less than a predetermined lower limit charge amount, the power supply target determining section charges the battery with electric power supplied from a power grid to the charge and discharge apparatus.

8. A power supply managing method executed by a computer, the method **characterized by** comprising:
a charge amount recognizing step of recognizing a charge amount of a battery (32) mounted on a movable body (5); and
a power supply target determining step of determining, when the movable body is in a state where power supply from the battery to a charge and discharge apparatus (9) is possible, a power supply target based on the charge amount of the battery and a current time, the power supply target being to undergo power supply from the battery via the charge and discharge apparatus.
